# EUROPEAN PATENT SPECIFICATION

(11) **EP 2 330 883 B1**
(45) Date of publication and mention of the grant of the patent: **21.01.2015**
(21) Application number: 09744749.4
(22) Date of filing: 01.10.2009
(51) Int. Cl.: A01D 34/62, A01D 75/20

(54) **APPARATUS FOR SHREDDING A MATERIAL**
VORRICHTUNG ZUM ZERKLEINERN EINES MATERIALS
APPAREIL POUR DÉCHIQUETER UN MATÉRIAU

(30) Priority: 02.10.2008 IT BO20080600
(43) Date of publication of application: 15.06.2011
(73) Proprietor: Nobili S.p.A., 40062 Molinella (Bologna) (IT)
(72) Inventor: ROSSI, Mario, I-40062 Molinella (Bologna) (IT)
(74) Representative: Fanzini, Valeriano
(86) International application number: PCT/IB2009/054295
(87) International publication number: WO 2010/038208

(56) References cited:
- EP-A2- 1 869 963
- US-A- 3 306 015
- US-A- 4 499 711
- US-A- 4 690 224
- US-A- 5 133 175
- US-A- 5 279 100
- US-A1- 2003 074 873

## Description

### Technical Field

This invention relates to an apparatus for shredding a material, in particular for shredding a plant material or the like.

### Background Art

Prior art apparatuses for shredding grass or other plant materials are known in the agricultural field: The shredded material is allowed to fall directly to the ground. These apparatuses have a mounting frame, made of metal, with a body which delimits a shredding compartment formed by an upper cover and opposite side covers that support a horizontal rotor on which a plurality of radial shredding tools are mounted in articulated fashion (see e.g. US-A-3306015).

In prior art apparatuses as that disclosed in EP 1869963, there is a longitudinal opening at the front through which the material to be shredded enters and which is covered by strips of rigid plastic, metal, or hard rubber that can swing towards the inside of the apparatus, and a longitudinal opening at the back through which the shredded material comes out and which is covered by metal panels or strips of rigid plastic or hard rubber which, in some versions of the shredding apparatus, can be opened.

To avoid excessive pressure on the material as it enters the apparatus, the rigid strips covering the front opening are limited in length and, in use, their bottom ends are well clear of the ground below them.

Similarly, to avoid material building up in the shredding chamber or compartment, which might prevent shredding from being carried out properly or lead to uneven distribution of the shredded material on the ground, the rear closing panels are also made in such a way that their bottom edges are kept clear of the ground or the panels are well clear of the ground when the rear opening is left completely open.

These prior art apparatuses, however, have the disadvantage that stones, hard clods of earth or other solid object may strike the shredding rotor as it rotates and be flung out through the front opening, or bounce on the ground and be thrown out through the rear opening, creating the risk of striking nearby persons or property, leading to serious personal injury or damage to property.

### Summary of the Invention

It is therefore provided an apparatus for shredding a material according to claim 1.

In this way, the material is prevented from being hurled out of the apparatus in unwanted manner and without hindering shredding operations.

That is because the intercepting means form an air outlet directed substantially upwards and thus avoid excessive pressure from being applied to the material entering the shredding compartment and/or enable the material to leave the shredding compartment easily so that it does - not accumulate inside the compartment.

### Brief Description of the Drawings

The technical characteristics of the apparatus are clearly described in the claims below and its advantages are more apparent from the detailed description which follows, with reference to the accompanying drawings which illustrate non-limiting example embodiments of the invention, and in which:
- Figure 1 is a perspective view of the rear part of a first preferred embodiment of the shredding apparatus according to this invention;
- Figure 2 is a perspective view of the front part of the first preferred embodiment of the shredding apparatus according to the invention;
- Figure 3 is a side view of the first preferred embodiment of the apparatus according to the invention;
- Figure 4 is a perspective view of the front part of a second preferred embodiment of the shredding apparatus according to the invention;
- Figure 5 is a top view of the second preferred embodiment of the apparatus according to the invention;
- Figure 6 is a schematic side view of the second preferred embodiment of the shredding apparatus according to the invention;
- Figure 7A is a perspective view of the rear part of a third preferred embodiment of the shredding apparatus according to the invention;
- Figure 7B is a perspective view of the front part of the third preferred embodiment of the shredding apparatus according to the invention;
- Figure 8A is a perspective view of the rear part of a fourth preferred embodiment of the shredding apparatus according to the invention;
- Figure 8B is a perspective view of the front part of the fourth preferred embodiment of the shredding apparatus according to the invention;
- Figure 9 is a top plan view of the fourth preferred embodiment of the shredding apparatus according to the invention;
- Figure 10 is a side view of the fourth preferred embodiment of the shredding apparatus according to the invention;
- Figure 11 is a longitudinal section of the fourth preferred embodiment of the shredding apparatus according to the invention;
- Figure 12A is a perspective detail view showing the hinge of the intercepting means in the fourth preferred embodiment of the shredding apparatus according to the invention;
- Figure 12B is a cross section of a detail of the hinge of the intercepting means in the fourth preferred embodiment of the shredding apparatus according to the invention;
- Figure 13 is a perspective detail view showing the intermediate coupling of the intercepting means in the fourth preferred embodiment of the shredding apparatus according to the invention;
- Figure 14 is a perspective detail view showing the intermediate coupling of the intercepting means in the fourth preferred embodiment of the shredding apparatus according to the invention.

### Description of the Preferred Embodiments of the Invention

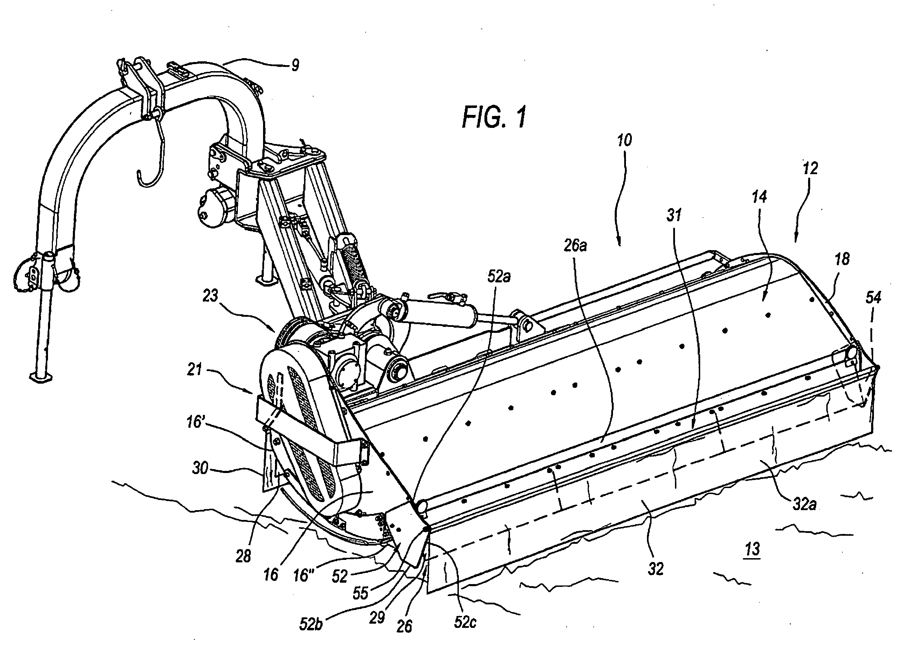

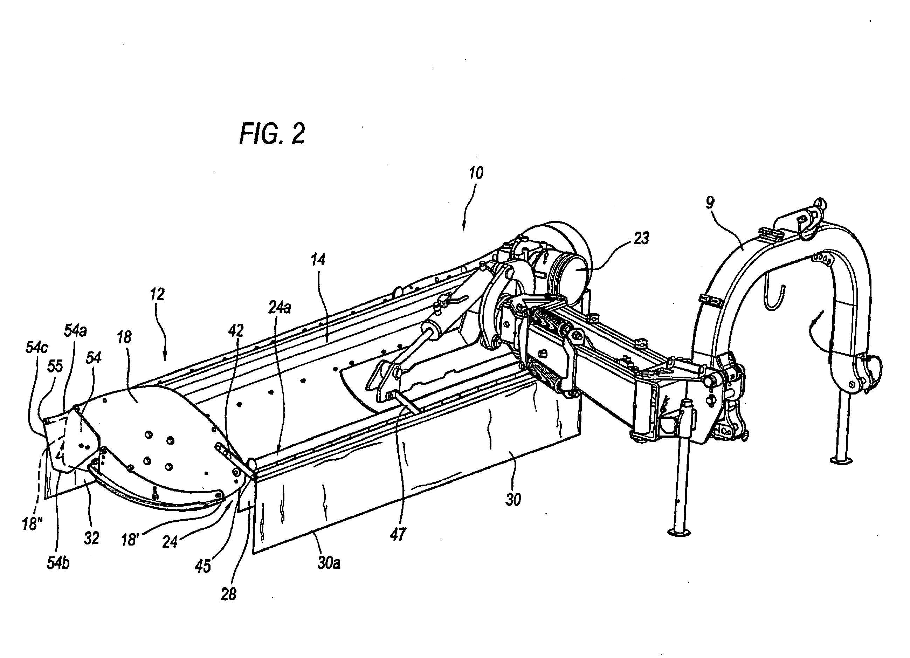

A first preferred embodiment 10 of an apparatus for shredding a material, in particular a plant material such as grass, or the like, lying on a respective ground 13, comprises, as illustrated in Figures 1 to 3, a frame 12 made of metal, forming a containment body having an arcuate upper covering portion 14 extending transversally across opposite, substantially vertical lateral portions or plates 16 and 18 that support the cover 12 and which, in their entirety, are adapted to form a compartment 19 for housing a shredding rotor 20 mounted with its axis of rotation extending substantially transversally, or horizontally.

As illustrated, from the rotor shaft 20 there extend radially a plurality of shredding elements 22 mounted in articulated fashion on the rotor 20 and suitably distributed on the latter both circumferentially and axially. Further, the reference numeral denotes a transversal shearing surface 25 acting in conjunction with the cutting edges of the shredding tools 22.

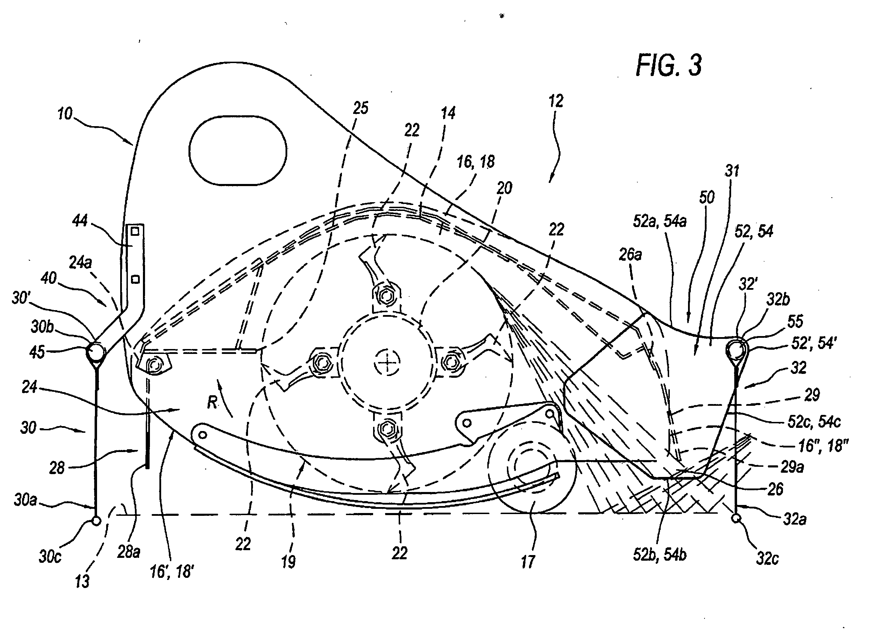

In practice, as may be clearly inferred from Figure 3, a shredding or working chamber or compartment 19, which the shredding rotor operates in, is formed between the ground 13 and the mounting frame 12.

The rotor 20 is mounted rotatably, in the direction indicated by the arrow R in Figure 3, on the vertical, or longitudinal, side plates 16, 18, one of which is provided with a transmission unit 21 housed in a protective guard and driven through a respective operating connection by a power takeoff 23 forming part of the vehicle that tows the apparatus.

As illustrated, the frame 12 comprises respective openings extending longitudinally and being in the form of a front longitudinal opening 24 and a rear longitudinal opening 26 leading respectively into and out of the shredding compartment 19, said openings 24, 26 extending transversally of the apparatus or of the direction in which the apparatus travels.

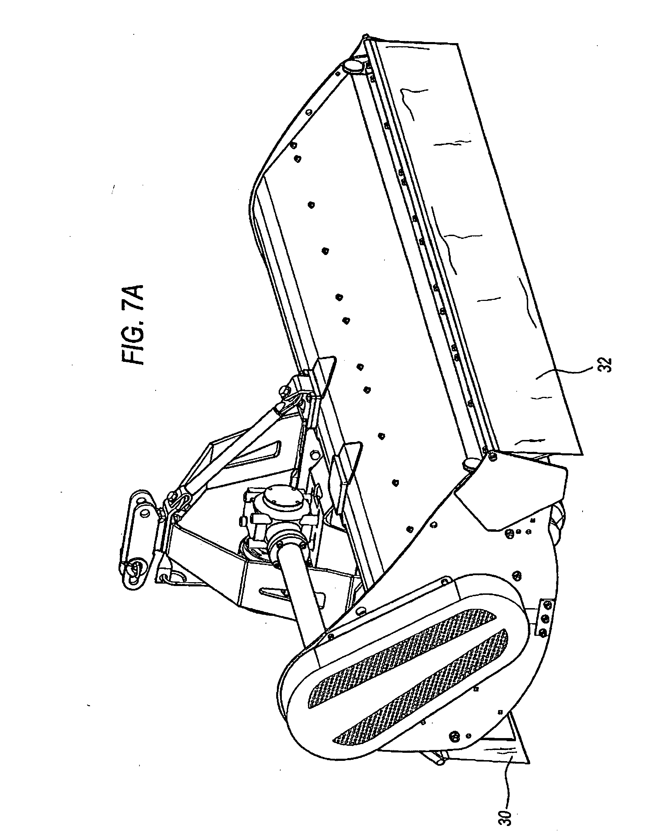

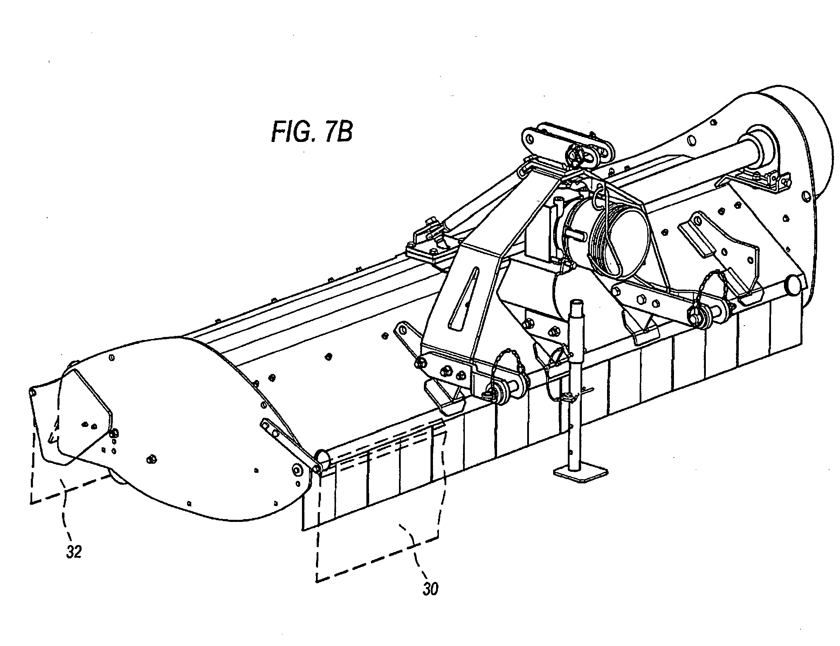

The first preferred embodiment, illustrated in Figures 1 to 3, is equipped with an articulated arm 9 for mounting the apparatus. Another embodiment of the apparatus, however, illustrated in Figures 7A and 7B and similar to the first embodiment being described, might be without the mounting arm. The components of this other, third embodiment of the apparatus are similar to those of the first embodiment and, for brevity and convenience, will not be described again in detail. In particular, the reference numerals 30, 32, denote the screening means of this apparatus, drawn schematically with dashed lines in Figure 7B.

As may be inferred in particular from Figure 3, the front opening 24 is defined by a front transversal edge, labelled 24a in Figure 3, of the arcuate cover portion 14 of the frame, and by respective front edges 16', 18' of the side plates 16,18.

The rear opening 26 is in turn defined by a rear transversal edge 26a of the upper cover portion 14 and by respective rear edges 16", 18" of the side plates 16, 18.

Advantageously, it is contemplated the provision, at the respective longitudinal opening 24 or 26, which extends transversally substantially for the full width of the apparatus, of means for intercepting the material, said means being in the form of intercepting means that are compliant perpendicularly or in a direction substantially perpendicular to the ground 13 and whose bottom end 30a or 32a, respectively, extends substantially at the ground. The intercepting means are labelled 30 and 32 in the accompanying drawings.

Thus, the material is prevented from being flung out of the shredding chamber or compartment in an unwanted manner.

Further, the intercepting means 30, 32 avoid excessive pressure from being applied to the material entering the shredding compartment and/or enable the material to leave the shredding compartment easily so that it does not accumulate inside the compartment

That also guarantees the respective opening is fully screened.

In particular, intercepting means 30 are provided at the front longitudinal opening 24 of the apparatus and intercepting means 32 are provided at the rear longitudinal opening 26.

As illustrated, the apparatus according to the invention also comprises means for closing the front opening 24, labelled 28 in their entirety, extending at the front opening 24 itself, and being in the form of a plurality of movable strips made of a substantially rigid material and having a respective bottom end 28a which, in use, is perpendicularly spaced from the ground below it The strips 28 are pivoted, by their respective top ends, to the mounting frame of the apparatus, substantially at the transversal edge 24a that delimits the top of the opening 24.

Means 29 are also provided for closing the respective rear opening, said means being provided at the rear opening 26 itself and being preferably in the form of a one or more rigid panels or slats whose bottom end 29a, in use, is perpendicularly spaced from the ground 13 below it. The slats 29 are fixed substantially at the transversal edge 26a delimiting the top of the rear opening 26.

Advantageously, the front and rear, perpendicularly compliant intercepting means, labelled 30 and 32 respectively, have respective bottom ends 30a, 32a that extend downwardly beyond the bottom ends 28a, 29a of the respective means 28, 29 for closing the longitudinal openings 24, 26.

As illustrated schematically in Figure 3, the respective bottom ends 30a, 32a of the front and rear intercepting means 30 and 32 come into contact with the ground 13 and/or with the material lying thereon and scrape over the ground and/or material as the apparatus is driven forward.

Advantageously, the intercepting means 30, 32 are in the form of a flexible or folding sheet, that is to say, an element, or membrane, extending mainly in two dimensions, of reduced thickness, made of a flexible or elastically folding material, or in any way adapted to constitute means that are compliant perpendicularly or in a direction perpendicular to the ground when the opposing action of the ground or of the material lying on the ground is applied to it.

The flexible sheet constituting the front and rear intercepting means 30 and 32 is preferably made of a plastic material and has a large main screening portion that terminates at the top with a respective annular end 30b, 32b designed to be fitted on a respective transversal mounting rod or 45, 55 and a bottom end provided with a reinforcement of rigid plastic terminating with full circular end pieces 30c and 32c, respectively, for added strength and resistance to sliding wear.

It is also contemplated the provision, though not illustrated in detail in the accompanying drawings, of means for keeping the sheet or two-dimensional element in the outspread condition, that is to say, means for keeping the respective bottom end 30a, 32a of the intercepting means on the ground.

Advantageously, these outspreading means are in the form of convenient means for weighting the intercepting means.

Said weighing means, if provided, would be located at the bottom ends 30a, 32a of the intercepting elements and might be in the form of a plurality of weights, for example small metal blocks, fixed to the sheet and transversally distributed at a suitable spacing from each other.

The front intercepting means 30 are located forwardly of, and at a predetermined longitudinal distance from, the respective means 28 that close the front opening 24. As illustrated, the front intercepting means 30 are located forwardly of the front opening 24 at a predetermined longitudinal distance.

The intercepting means 32 at the rear opening 26 are located rearwardly of, and longitudinally spaced from, the respective closing means 29.

As illustrated, the intercepting means 32 are located rearwardly of the rear opening 26 at a predetermined longitudinal distance.

The intercepting means 30, 32 are designed to screen the respective openings 24, 26 longitudinally or, more specifically, are designed to screen the spaces between the bottom ends 28a, 29a, of the means that close the respective openings 24, 26, and the ground below and/or the material lying thereon.

In practice, are provided intercepting means 30, 32 which are in the form of means extending mainly in two dimensions, which are compliant in a direction substantially perpendicular to the ground, or whose bottom edge follows the humps and dips in the ground and/or in the material lying thereon, in such a way as to allow the material to be shredded to enter the shredding means and to allow the same material, after being shredded, to easily leave the shredding means, and to intercept any object before it is flung out of the shredding chamber in unwanted manner.

The intercepting means 30, 32 extend transversally to the longitudinal direction in which the apparatus travels, substantially across the full width of the opening 24,26, or width of the apparatus 10.

In particular, the two-dimensional means, or sheet, 30, 32 are mounted on the apparatus 10 in a suspended condition such as to allow the intercepting means themselves to be kept in the outspread condition, in particular under their own weight or, if fitted, under the action of the outspreading or weighting means.

The intercepting means 30, 32 also comprise respective top ends 30', 32' for coupling or fixing and extending at or above, in particular just above the top edges 24a, 26a of the respective longitudinal openings 24, 26.

Advantageously, as illustrated in particular in Figure 3, the rear intercepting means 32 are longitudinally spaced from the rear opening 26, or from the rear end of the shredding chamber or compartment 19, that is to say, from the rear end of the apparatus, so as to create an outlet passage to let air and/or the material easily out of the shredding chamber 19.

In particular, as illustrated, the rear intercepting means 32 have a respective upper coupling end 32' that is longitudinally spaced from a matching end portion 26a of the cover 14, or from the means 29 that close the opening 26, in order to form a free air outlet 31 that makes it easier for the material to come out of the shredding chamber 19.

Advantageously, the air outlet 31, which leads upwards, creates an upwardly directed air outlet flow that does not disturb personnel or persons near the shredding apparatus.

Lateral intercepting or longitudinal extension means 52, 54 are advantageously provided, said means extending rearwardly of the rear opening 26 and being in the form of means for supporting or rearwardly extending the rear, transversal intercepting means 32.

The intercepting means 30, 32, extending transversally of the apparatus, are supported by respective mounting means which, in particular, extend from the lateral elements 16, 18 of the mounting frame.

More specifically, the means that mount the front transversal sheet 30 are denoted in their entirety by the reference numeral 40, while the means that mount the rear transversal sheet 32 are denoted in their entirety by the reference numeral 50.

The means 40 that mount the front sheet 30 extend forwardly of the apparatus and comprise a first and a second side arm 42, 44, each fixed to the respective side plate 16, 18 of the apparatus. The front mounting means 40 also comprise an intermediate arm 47 which extends forwardly of the apparatus and which is fixed to the respective front edge of the cover 14.

The arms 42, 44, 47 comprise a respective downwardly inclined longitudinal portion that mounts a transversal bar or base 45 from which the front intercepting sheet 30 hangs. Further, as illustrated, the side arm 44 has a vertical coupling portion from which the corresponding longitudinal portion extends.

The mounting arms 42, 44, 47 extend longitudinally along the apparatus and support the sheet 32 in a position slightly spaced longitudinally and forwardly of the respective front edges of the side plates 16, 18 and of the upper edge 24a that delimits the opening 26, that is, the inlet into the shredding compartment 19.

The means 50 that mount the rear transversal sheet 32 are in the form of respective metal side plates 52, 54, extending rearwardly of the apparatus and beyond the rear edge of the side plates 16, 18, or rearwardly of the outlet opening 26 of the shredding compartment 19.

The side mounting plates 52, 54 are fixed to the side plates 16, 18 and, in length, are such as to form lateral intercepting or screening means, with a rear upper corner 52', 54' fixed to a crossbar 55 from which the rear intercepting sheet 32 hangs.

As illustrated, the metal side plates 52, 54 extend longitudinally of the apparatus.

In particular, the top ends 52a, 54a of the side extension plates 52, 54 are located substantially at, or at a higher level than, and in particular at a slightly higher level than, the top edge 26a that delimits the rear opening 26.

Further, the bottom ends 52b, 54b of the respective flat side plates 52, 54 extend perpendicularly to, and at a predetermined distance from, the ground below, each plate 52, 54 being fixed to the frame of the apparatus in such a way as to be at a certain perpendicular distance from the point where the wheel 17 touches the ground 13.

Also, as illustrated, the bottom ends 52b, 54b of the respective side plates 52, 54 extend above the bottom edge 32a of the transversal intercepting means 32.

Further, as illustrated, the bottom ends 52b, 54b of the lateral intercepting plates 52, 54 extend under the bottom end 29a of the means 29 that close the rear opening 26.

Further, as illustrated, the rear edges 52c, 54c of the mounting plates 52, 54 extend substantially at the transversal intercepting means 32.

In practice, therefore, side plates 52, 54 are made wide so as to provide lateral intercepting means and convenient means for mounting the main, rear transversal intercepting means 32 of the apparatus.

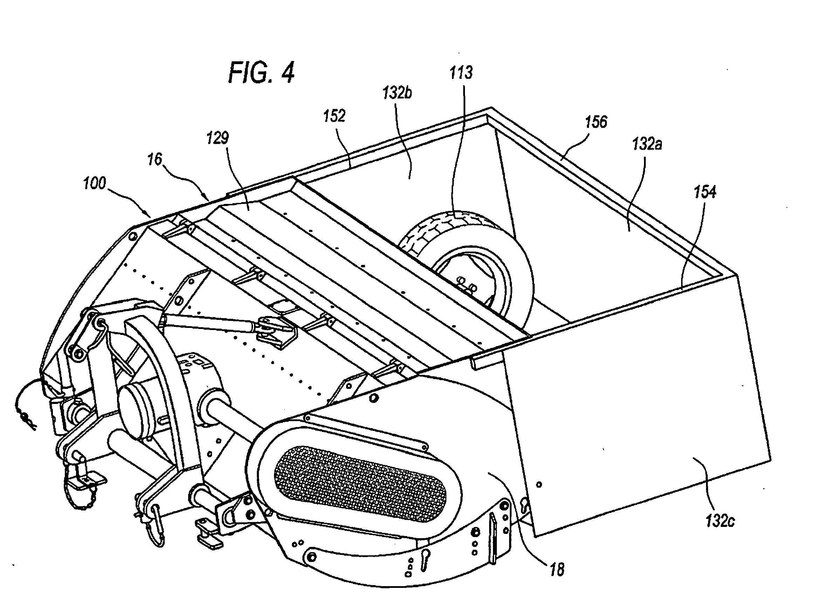

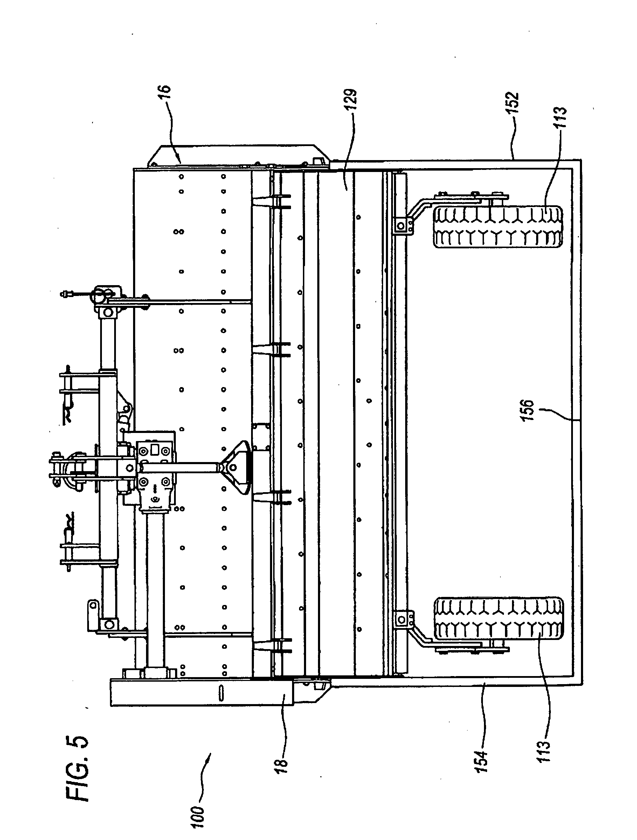

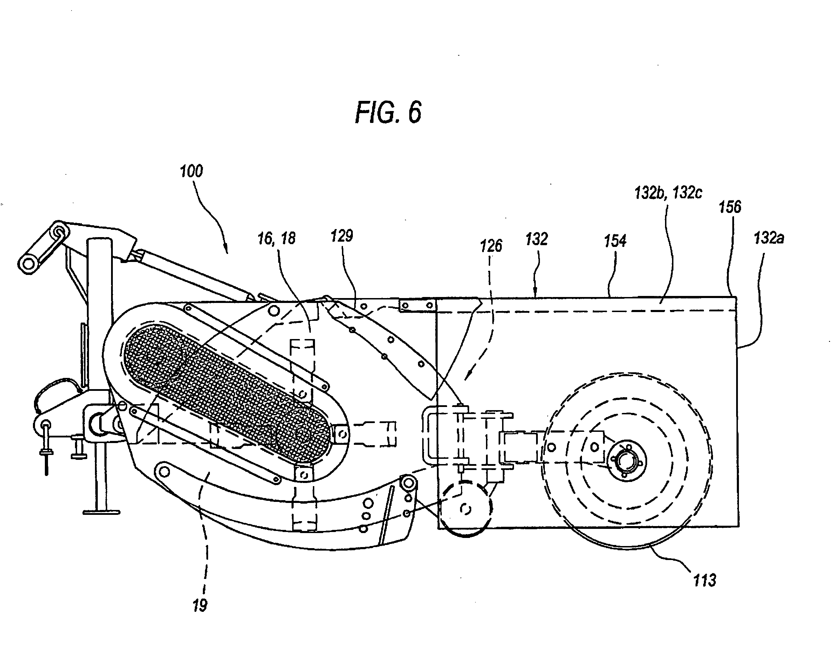

A second embodiment 100 of the apparatus is illustrated in Figures 4 to 6.

The second embodiment of the shredding apparatus comprises a cover or movable slat 129 that can be opened to let out the shredded product quickly and easily.

In the second preferred embodiment of the apparatus, the components similar to those of the first embodiment are labelled with the same reference characters and, for brevity and convenience, will not be described again in detail.

In particular, the intercepting means of the second embodiment, like those of the first preferred embodiment, are in the form of flexible or compliant two-dimensional means adapted to house or contain the wheels 113, 113 and extending from the back of the apparatus.

In particular, the intercepting means of this embodiment are in the form of a flexible sheet made of a plastic material which comprises a rear, transversal part 132a and corresponding lateral, longitudinal portions 132b, 132c to form a single sheet hanging from a portal-like frame extending substantially horizontally from the side plates 16,18 of the apparatus.

The mounting frame of the screening means 132a, 132b, 132c comprises a first and a second side arm 152, 154 that support a rear crossbar 156 from which the rear transversal end portion 132a hangs.

As illustrated, the lateral intercepting portions 132b, 132c hang from the respective longitudinal arms 152, 154, the latter being fixed to respective outside surfaces of the side plates 16,18 of the apparatus.

As illustrated, the intercepting means 132a, 132b, 132c have a bottom end on or at the level of the ground and a top end mounted on the frame 152, 154, 156 and located substantially at the movable door 129 when the latter is in the open condition, or substantially at the top end of the corresponding rear longitudinal opening 126 when the latter is closed by the door 129.

From another point of view, the compliant intercepting means 132a, 132b, 132c, that is, the transversal intercepting means 132a and the lateral intercepting means 132b, 132c, have respective top ends that extend at the level of the top of the frame, in particular of the body or upper cover of the frame, that is, at the upper end of the shredding compartment 19.

That way, the shredding means are provided with a wide screening surface.

In particular, the transversal intercepting means 132a are spaced from the wheel 113 on which the apparatus is mounted. In practice, the wheels 113 for conveying the apparatus are housed between the rear intercepting means 132a and the rear end of the apparatus. In another embodiment, the apparatus might travel and be mounted on a roller instead of the wheels 113.

As illustrated, the height of the transversal intercepting means in both these embodiments is substantially equal or slightly greater than the height of the rear outlet opening and their width substantially equal to the width of the shredding apparatus.

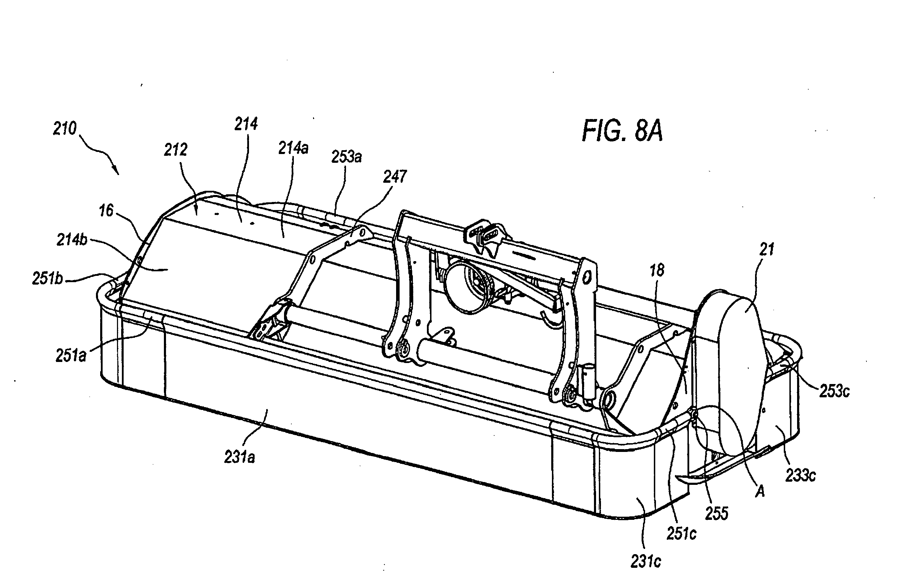

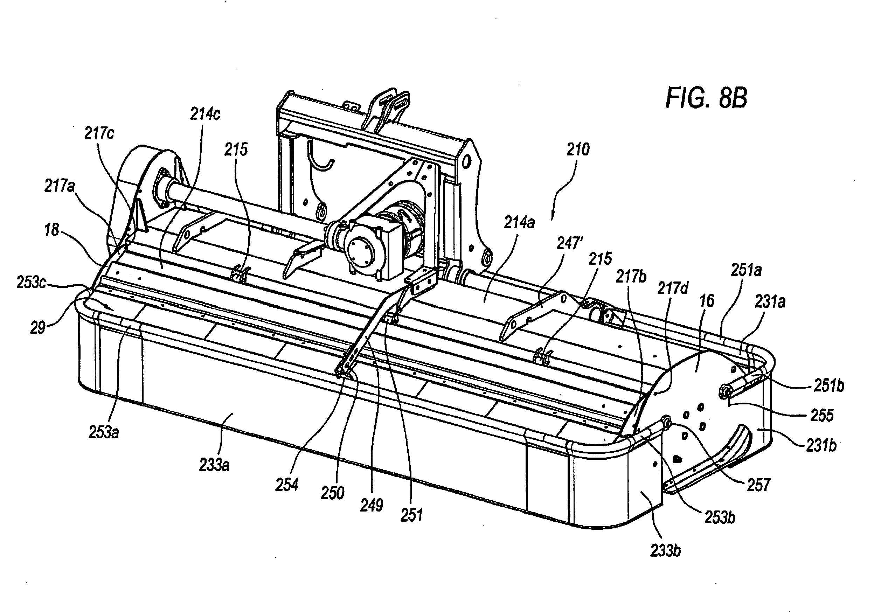

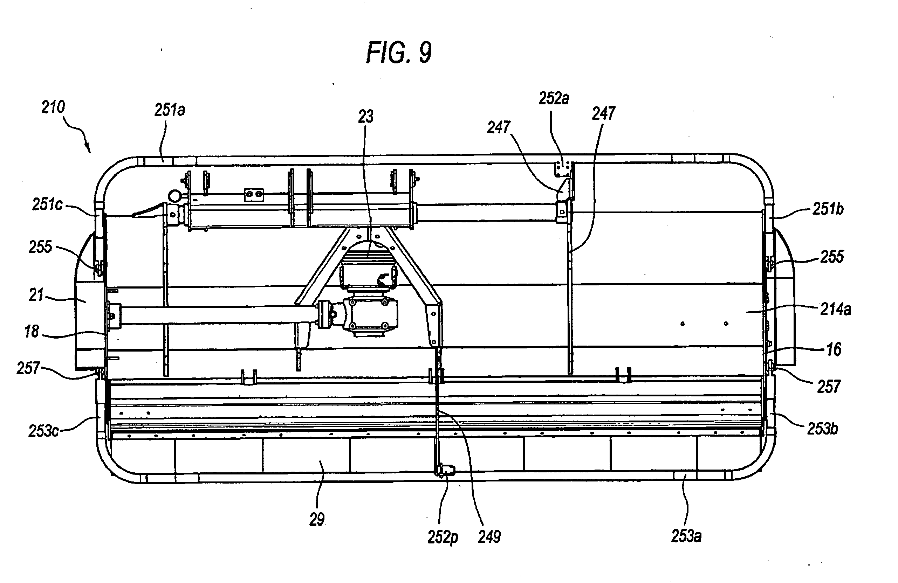

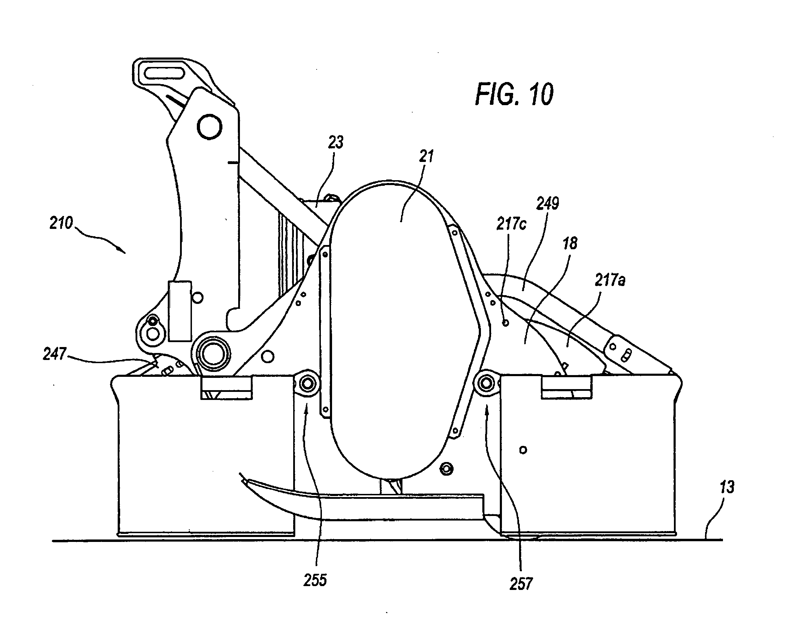

Figures 8A to 13 illustrate a fourth preferred embodiment 210 of the apparatus for shredding a material, in particular a plant material such as grass, or the like, lying on a respective ground 13.

Like the first embodiment, the fourth preferred embodiment 210 of the apparatus for shredding a material comprises a frame 212, made of metal, forming a containment body having a downwardly concave upper cover portion 214 extending transversally across opposite, substantially vertical lateral portions or plates 16 and 18 that support the cover 214 and which, in their entirety, are adapted to form a compartment 19 for housing a shredding rotor 20 mounted with its axis of rotation extending substantially transversally, or horizontally, and which is identical to the one of the preferred embodiment described and thus not described again in detail, and whose shredding elements 22 act in conjunction with a shredding shear surface 225.

As already described, the shredding or working chamber 19, which the shredding rotor operates in, is formed between the ground 13 and the mounting frame 12. There are also a transmission unit, housed in a protective guard 21, and a power takeoff 23, similar to those of the preferred embodiment described above, both made in a manner well-known to experts in the trade and not described again in detail.

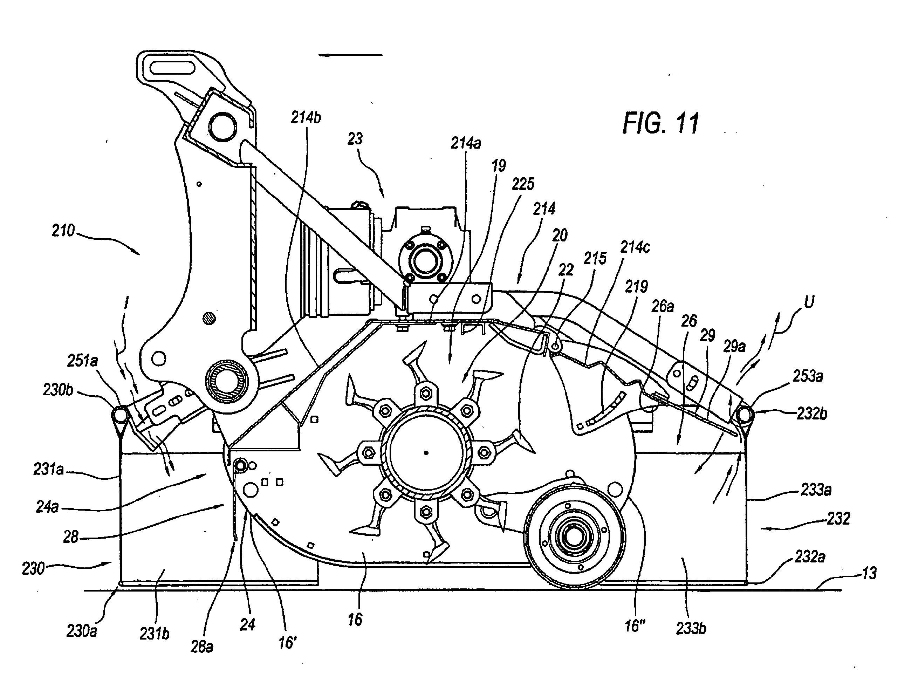

As illustrated, in particular in Figure 11, the frame 212 also comprises respective openings extending longitudinally and being in the form of a front longitudinal opening 24 and a rear longitudinal opening 26 leading respectively into and out of the shredding compartment 19, said openings 24, 26 extending transversally of the apparatus or of the direction in which the apparatus travels.

As may be inferred in particular from Figure 11, the front opening 24 is defined by a front transversal edge, labelled 24a in Figure 11, of the cover portion 214 of the frame, and by a respective front edge of the side plates 16, 18. Figure 11 shows only the front edge 16' of the side plate 16 of the mounting plate. The front edge of the side plate 18 is identical to the front edge 16' of the side plate 16 of the mounting plate.

The rear opening 26 is in turn defined by a rear transversal edge 26a of the upper cover portion 214 and by respective rear edges of the side plates 16, 18. Figure 11 shows only the rear edge 16" of the side plate 16 of the mounting plate. The rear edge of the side plate 18 is identical to the rear edge 16' of the side plate 16 of the mounting plate.

In the fourth preferred embodiment, the downwardly concave upper portion 214 comprises a substantially horizontal, flat, upper transversal panel 214a from the front of which there extends downwardly another flat transversal panel 214b making an angle with the upper panel 214a.

From the back of the upper panel 214a there extends downwardly a further transversal panel 214c connected in such a way that it can be turned by a desired angle to adjust the opening of the rear outlet of the shredding compartment For that purpose, the rear panel 214c is hinged, at 215, to the rear edge of the upper panel 214a and has longitudinal side plates 217a, 217b located on the inside of the main side plates 16, 18 which are hinged to them at 217c, 217d. On at least one of the side plates 217a, 217b of the movable panel 214c there is a split 219 for adjusting the angular position of the panel by cooperatively engaging and disengaging a pin that extends from the adjacent side plate of the apparatus.

As will become clearer as this description continues, the panel 214c which can be turned to a required angular position is provided with means 29, extending from it, for closing the opening and being in the form of strips lying substantially in the same plane as the panel 214c itself and extending rearwards and downwards from the free transversal edge 26a of the panel which defines the rear opening 26.

Also in the fourth preferred embodiment of it, the invention advantageously contemplates the provision, at the respective longitudinal opening 24 or 26, which extends transversally substantially for the full width of the apparatus, of means for intercepting the material, said means being in the form of intercepting means that are compliant perpendicularly or in a direction substantially perpendicular to the ground 13 and whose bottom end 230a or 232a, respectively, extends substantially at the ground. The intercepting means are labelled 230 and 232 in the accompanying drawings.

In particular, intercepting means 230 are provided at the front longitudinal opening 24 of the apparatus and intercepting means 232 are provided at the rear longitudinal opening.

In the fourth preferred embodiment, too, means are also provided for closing the front opening 24 and extending at the front opening 24 itself. These closing means are identical to the closing means of the first preferred embodiment, being in the form of a plurality of movable strips 28 made of a substantially rigid material and having a respective bottom end 28a which, in use, is perpendicularly spaced from the ground below it The closing strips are pivoted, by their respective top ends, to the mounting frame of the apparatus, substantially at the transversal edge 24a that delimits the top of the opening 24.

In the fourth preferred embodiment, too, means 29 are also provided for closing the respective rear opening, said means being provided at the rear opening 26 itself and being preferably in the form of a one or more rigid panels or slats whose bottom end 29a, in use, is perpendicularly spaced from the ground 13 below it. The slats 29 are fixed substantially at the transversal edge 26a delimiting the top of the rear opening 26.

Advantageously, the rear, perpendicularly compliant intercepting means, 232 have respective bottom ends 232a that extends downwardly beyond the bottom end 29a of the respective means 29 for closing the longitudinal opening 26.

In the fourth preferred embodiment, too, the respective bottom ends 230a, 232a of the front and rear intercepting means 230 and 232 are designed to come into contact with the ground 13 and/or with the material lying thereon and scrape over the ground and/or material as the apparatus is driven forwards.

Also in the fourth preferred embodiment, the intercepting means 230, 232 are in the form of a flexible or folding sheet, that is to say, an element, or membrane, extending mainly in two dimensions made of a flexible or elastically folding material, or in any way adapted to constitute means that are compliant perpendicularly or in a direction perpendicular to the ground when the opposing action of the ground or of the material lying on the ground is applied to it.

The flexible sheet constituting the front and rear intercepting means 230 and 232 of the fourth preferred embodiment is also preferably made of a plastic material and has a large main screening portion that terminates at the top with a respective annular end 230b, 232b designed to be fitted on a respective tubular mounting rod 251a, 251b, 251c, 253a, 253b, 253c, described in more detail below, and a bottom end that may be provided with a reinforcement of rigid plastic, like that of the first preferred embodiment described above, to improve resistance to sliding wear.

As illustrated, the front intercepting means 230 are located forwardly of, and at a predetermined longitudinal distance from, the opening 24 and the means 28 that close the front opening 24. In this case, the flow of air into the shredding chamber 19 is facilitated.

The intercepting means 232 at the rear opening 26 are located rearwardly of, and longitudinally spaced from, the respective closing means 29. In this case, the flow of air out of the shredding chamber 19 is facilitated.

As already stated, the intercepting means 230, 232 of the fourth preferred embodiment are also designed to screen the respective openings 24, 26 longitudinally. More specifically, the rear intercepting means 232 are designed to screen the space between the bottom end 28a, 29a, of the means that close a respective opening 24, 26, and the ground below and/or the material lying thereon.

In practice, it is provided intercepting means 230, 232 which are in the form of means extending mainly in two dimensions, which are compliant in a direction substantially perpendicular to the ground, or whose bottom edge follows the humps and dips in the ground and/or in the material lying thereon, in such a way as to allow the material to be shredded to enter the shredding means and to allow the same material, after being shredded, to leave the shredding means, and to intercept any object before it is flung out of the shredding chamber in unwanted manner.

When the closing means 29 are in the raised position, illustrated in Figure 11, allowing air to flow out of the shredding chamber 19 more easily, to be used preferably when the apparatus is moving at high speed, the intercepting means 29 intercept practically all the shredded material which is thus expelled from the back.

Further, if there are no means, or strips, for closing the front opening 24, as in this case, the intercepting means 230 intercept any material that is accidentally expelled from the opening 24.

As illustrated in Figure 11, the front intercepting means 230 of the fourth preferred embodiment also comprise a respective top end 230b extending above the top edge 24a of the respective longitudinal opening 24.

The rear intercepting means 232 of the fourth preferred embodiment have a respective top end 232b which extends above, in particular just above, the top edge 26a of the respective longitudinal opening 26 when the panel 214c is in the lowered position.

The rear intercepting means 232 of the fourth preferred embodiment in turn have a respective top end 232b which extends substantially at the top edge 26a of the respective longitudinal opening 26 when the panel 214c is in the raised position. Further, the rear intercepting means 232 of the fourth preferred embodiment have a respective top end 232b which extends above, in particular just above, the end edge 29a of the closing means 29 when the panel 214c is in the raised or open position, as illustrated in Figure 11.

In the fourth preferred embodiment, too, the intercepting means 230, 232 extend transversally to the longitudinal direction in which the apparatus travels, substantially across the full width of the opening 24,26, or width of the apparatus, and are mounted on the apparatus 10 in a suspended condition.

Advantageously, the intercepting means 230, 232 form an air outlet.

In practice, the intercepting means 230, 232 are longitudinally spaced from the respective opening 24, 26 to form an air outlet, and in particular, an air outlet directed substantially upwards.

As illustrated in particular in Figure 11, the rear intercepting means 230, 232 are longitudinally spaced from the respective front or rear opening 24, 26 or from the closing means 28, 29 so as to create an outlet passage to let air and/or the material easily out of the shredding chamber 19. The upwardly directed passage is longitudinally delimited by the top ends 230b, 232b of the respective front and rear intercepting means 230, 232 and a longitudinally opposite surface of the structure that delimits the shredding chamber 19, more specifically and respectively, an opposite surface of the front panel 214a and an opposite surface of the rear panel 214c when the rear panel 214c is in the lowered or closed position.

The upwardly directed rear passage, on the other hand, is delimited by the top end 232b of the rear intercepting means 232 and a respective surface of the rear closing means 29, when the panel 214c is in the raised or open condition illustrated in Figure 11. The air flow in and out of these upwardly directed passages is indicated schematically by the arrows in Figure 11, labelled I and U.

In particular, the intercepting means of this embodiment are in the form of a flexible sheet made of plastic material which comprises a main transversal part 231a, 233a and at least a first and a second lateral, or longitudinal portion 231b, 231c, 233b, 233c to form a single sheet hanging from a generally U-shaped frame extending from the side plates 16,18 of the apparatus.

The mounting frame of the front screening means 231 a, 231b, 231c and rear screening means 232a, 232b, 232c comprises a first and a second side arm 251b, 251c, and 253b, 253c for supporting the longitudinal hanging portions 231b, 231c, 233b, 233c of the respective intercepting sheets 230, 232, and supporting respective crossbars 251a, 253a from which the transversal end portions 231a, 233a of the respective intercepting sheets 230,232 hang.

As illustrated, the means that support the intercepting means, and in particular, the respective first and second side arms 251b, 251c, and 253b, 253c extend from the side plates 16,18 of the mounting frame.

In practice, the intercepting means of this embodiment comprise a respective sheet having a main intercepting part 231a, 233a that extends transversally and corresponding longitudinal parts 231b, 232c, 233b, 233c extending laterally of the main part.

Means are advantageously provided for adjusting the vertical position of the intercepting means 230, 232 relative to the frame 214 of the apparatus. That way, the sheet can be adapted to the different working heights the apparatus can be set at.

In other terms, the intercepting means 230, 232 are adjustable in height.

More specifically, means 255, 255, 257, 257, 250a, 253a, 250p, 253p are provided for positioning the intercepting means 230, 232 at a suitable position in height relative to the apparatus.

In particular, the means for placing the intercepting means 230, 232 at a suitable position relative to the apparatus are in the form of means for rotating the intercepting means.

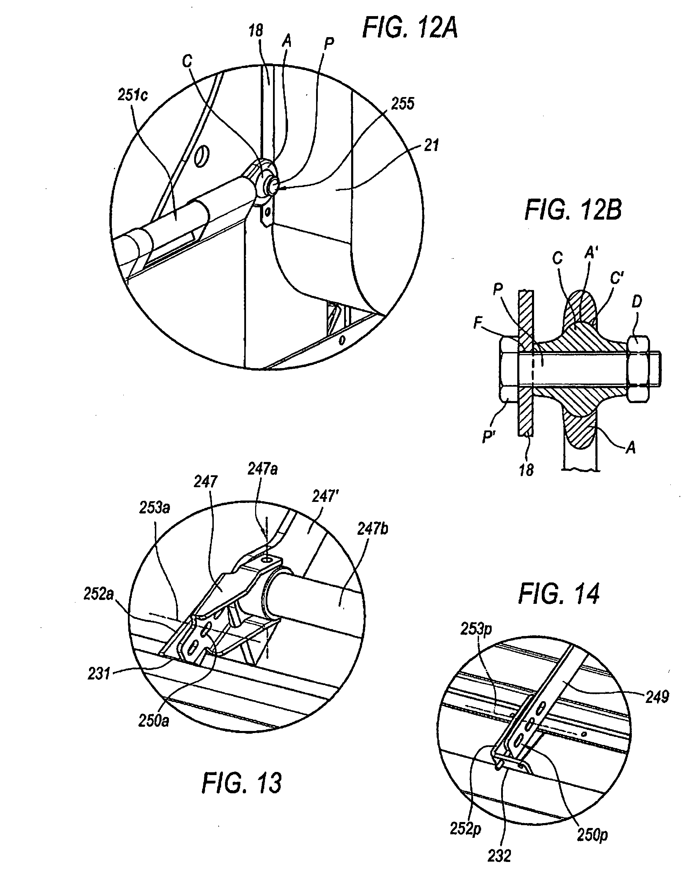

As illustrated in particular in Figure 12A, the means for rotating the intercepting means are in the form of hinge means fitted between the side arms 251b, 251c, 253b, 253c of the means that support the intercepting means 230, 232 and the mounting frame of the apparatus.

More specifically, the hinge means 255, 255, 257, 257 are designed to position the intercepting means 230, 232 at a suitable position in height relative to the apparatus.

As illustrated, the hinge means 255, 255, 257, 257 are located between the coupling end of the side arms 251b, 251c, 253b, 253c of the means that support the intercepting means 230, 232 and the apparatus frame, in particular, the frame side plates 16, 18.

As illustrated by the details in Figures 12A and 12B, the hinge means 255, 255, 257, 257 comprise a threaded pin or stem P designed to be inserted in a through hole F made in the respective side plate 16, 18 and mounting a respective articulation or rotation element made integrally inside an annular portion or eye A at the end of the respective side arm 251b, 251c, 253b, 253c.

In practice, the eye A has an inside surface A' that rotates, with friction, on the outside surface C' of the metal hinge element C. As illustrated, the hinge element C has a through hole in it that fits round the outside surface of the pin P.

The stem P is in the form of a bolt whose large head P' is on the inside of the side plate 18. A lock nut D is provided at the opposite end of the stem P.

The means for supporting the front and rear intercepting means 230, 232, also comprise an intermediate longitudinal member 247, 249 that is integral with the apparatus frame. In particular the intermediate arm 247 that supports the intercepting means 230 extends towards the front and the intermediate arm 249 that supports the intercepting means 232 extends towards the rear.

In particular, as illustrated, the front longitudinal arm 247 is in the form of a short arm fixed by a bolt 247a (schematically represented in Figure 13 with dot-dashed line) and a crossbar 247b of the tow vehicle hitch means, one end of which is supported by a longitudinal rib 247' fixed to the body 214.

As illustrated, the front and rear arms 247, 249 are longitudinally offset or transversally spaced from each other. In particular, the rear arm 249 for supporting the intercepting means 232 is substantially at the centre line of the frame or cover 212.

As illustrated, the means for placing the intercepting means 230, 232 in a suitable relative position in height are located at the free end of the respective longitudinal arm 247, 249 and are in the form of engageable/disengageable means.

These engageable/disengageable means are designed to enable the intercepting means to be turned and lifted relative to the supporting arm 247, 249.

In practice, means are provided for placing the intercepting means in a relative position relative to the frame at the free end of the corresponding longitudinal arm 247, 249.

As may be inferred from the detail shown in Figure 13, the engageable and disengageable means designed to place the front intercepting means 230 in a suitable position relative to the apparatus comprise a respective bolt 253a (schematically represented with a dot-dashed line) having a stem that can be inserted into a respective oblong hole 250a made in the corresponding longitudinal arm 247 connected to the mounting frame of the apparatus and into a respective hole made in the bracket 252a for coupling to the intercepting means 230.

Similarly, as may be inferred from the detail shown in Figure 14, the engageable and disengageable means designed to place the rear intercepting means 232 in a suitable position relative to the apparatus comprise a respective bolt 253p (schematically represented with a dot-dashed line) having a stem that can be inserted into a respective oblong hole 250p made in the corresponding longitudinal arm 249 connected to the mounting frame of the apparatus and into a respective hole made in the bracket 252p for coupling to the intercepting means 232.

That way, each of the brackets 252a, 252p fixed to the intercepting means can be turned and lifted relative to the supporting arm 247.

In the fourth preferred embodiment, therefore, the invention contemplates the provision of side intercepting means that extend rearwardly of the rear longitudinal opening 26 and side intercepting means that extend forwardly of the front longitudinal opening 24.

The invention described above is susceptible of industrial application and may be modified and adapted in several ways without thereby departing from the scope of the invention as defined by the appended claims. Moreover, all details of the invention may be substituted by technically equivalent elements.

## Claims

1. An apparatus (10) for shredding a material, in particular plant material, especially grassy material, lying on a respective ground (13), comprising a frame (12) that defines a compartment (19) for housing a shredding rotor (20) and having at least one opening (24, 26) for the passage of the material and extending longitudinally of the apparatus, the apparatus comprising respective intercepting means (30, 32); **characterized in that** the intercepting means (30, 32) are longitudinally spaced from the respective opening (24, 26) and forms an air outlet directed substantially upwards.

2. The apparatus according to claim 1, **characterized in that characterized in that** it comprises means, located at the respective longitudinal opening (24, 26), for intercepting the material, these means being in the form of respective intercepting means that are compliant in a direction substantially perpendicular to the ground.

3. The apparatus according to either of the foregoing claims, **characterized in that** it comprises means (28, 29) for closing the respective opening and which are located at the longitudinal opening (24, 26) itself.

4. The apparatus according to any of the foregoing claims, **characterized in that** the intercepting means (30) are located at the front longitudinal opening (24).

5. The apparatus according to any of the foregoing claims, **characterized in that** the intercepting means (32) are located at the rear longitudinal opening (26).

6. The apparatus according to any of the foregoing claims, **characterized in that** it comprises intercepting means (30, 32) whose bottom end (30a, 32a) extends downwardly beyond the bottom end (28a, 29a) of the respective means (28, 29) for closing the respective longitudinal opening (24, 26).

7. The apparatus according to any of the foregoing claims, **characterized in that** the intercepting means (30, 32) are designed to extend with their respective bottom ends substantially down to the ground below and come into contact with the ground and/or the material lying thereon.

8. The apparatus according to any of the foregoing claims, **characterized in that** it comprises intercepting means (30, 32) in the form of flexible means extending principally in two dimensions, or in the form of a flexible sheet.

9. The apparatus according to any of the foregoing claims, **characterized in that** the intercepting means (32) at the rear opening (26) are located rearwardly of the respective closing means (29), and are longitudinally spaced from the respective closing means (29), or are longitudinally spaced from the rear opening (26).

10. The apparatus according to any of the foregoing claims, **characterized in that** the intercepting means (30) at the front opening (24) are located forwardly of the respective closing means (28).

11. The apparatus according to any of the foregoing claims, **characterized in that** the intercepting means (30) at the front opening (24) are longitudinally spaced from the respective closing means (28).

12. The apparatus according to any of the foregoing claims, **characterized in that** the intercepting means (30, 32) extend transversally relative to the direction of travel of the apparatus.

13. The apparatus according to any of the foregoing claims, **characterized in that** the intercepting means (30, 32) are supported in a suspended condition.

14. The apparatus according to any of the foregoing claims, **characterized in that** it comprises lateral intercepting means (52, 54), that extend rearwardly from the rear longitudinal opening (26), or **in that** it comprises lateral intercepting means extending forwardly of the front longitudinal opening (24).

15. The apparatus according to any of the foregoing claims, **characterized in that** the intercepting means (230, 232) are adjustable in height.

## Patentansprüche

1. Vorrichtung (10) zum Zerkleinern eines Materials, insbesondere eines Pflanzenmaterials, vor allem Grasmaterial, das auf einem entsprechenden Boden (13) liegt, umfassend einen Rahmen (12), der ein Fach (19) zur Aufnahme eines Zerkleinerungsrotors (20) definiert und mindestens eine Öffnung (24, 26) für den Durchlauf des Materials aufweist und sich longitudinal der Vorrichtung erstreckt, **dadurch gekennzeichnet, dass** sie Auffangmittel (30, 32) umfasst, die longitudinal von der entsprechenden Öffnung (24, 26) beabstandet sind, um einen Luftauslass zu bilden.

2. Vorrichtung nach Anspruch 1, **dadurch gekennzeichnet, dass** sie Mittel umfasst, die an der entsprechenden longitudinalen Öffnung (24, 26) liegen, um das Material aufzufangen, wobei diese Mittel in Form von entsprechenden Auffangmitteln vorliegen, die in eine Richtung nachgeben, die im Wesentlichen lotrecht zum Boden ist.

3. Vorrichtung nach einem der vorangehenden Ansprüche, **dadurch gekennzeichnet, dass** sie Mittel (28, 29) zum Schließen der entsprechenden Öffnung umfasst, die an der longitudinalen Öffnung (24, 26) liegen.

4. Vorrichtung nach einem der vorangehenden Ansprüche, **dadurch gekennzeichnet, dass** die Auffangmittel (30) an der vorderen longitudinalen Öffnung (24) liegen.

5. Vorrichtung nach einem der vorangehenden Ansprüche, **dadurch gekennzeichnet, dass** die Auffangmittel (32) an der hinteren longitudinalen Öffnung (26) liegen.

6. Vorrichtung nach einem der vorangehenden Ansprüche, **dadurch gekennzeichnet, dass** sie Auffangmittel (30, 32) umfasst, deren unteres Ende (30a, 32a) sich nach unten über das untere Ende (28a, 29a) der entsprechenden Mittel (28, 29) zum Schließen der entsprechenden longitudinalen Öffnung (24, 26) hinaus erstreckt.

7. Vorrichtung nach einem der vorangehenden Ansprüche, **dadurch gekennzeichnet, dass** die Auffangmittel (30, 32) dazu konzipiert sind, sich mit ihren entsprechenden unteren Enden im Wesentlichen nach unten zum darunter liegenden Boden zu erstrecken und mit dem Boden und/oder mit dem darauf liegenden Material in Kontakt kommen.

8. Vorrichtung nach einem der vorangehenden Ansprüche, **dadurch gekennzeichnet, dass** sie Auffangmittel (30, 32) in Form von flexiblen Mitteln, die sich hauptsächlich in zwei Dimensionen erstrecken, bzw. in Form einer flexiblen Platte, umfasst.

9. Vorrichtung nach einem der vorangehenden Ansprüche, **dadurch gekennzeichnet, dass** die Auffangmittel (32) an der hinteren Öffnung (26) hinter den entsprechenden Schließmitteln (29) liegen und longitudinal von den entsprechenden Schließmitteln (29) beabstandet sind bzw. longitudinal von der hinteren Öffnung (26) beabstandet sind.

10. Vorrichtung nach einem der vorangehenden Ansprüche, **dadurch gekennzeichnet, dass** die Auffangmittel (30) an der vorderen Öffnung (24) vor den entsprechenden Schließmitteln (28) liegen.

11. Vorrichtung nach einem der vorangehenden Ansprüche, **dadurch gekennzeichnet, dass** die Auffangmittel (30) an der vorderen Öffnung (24) longitudinal von den entsprechenden Schließmitteln (28) beabstandet sind.

12. Vorrichtung nach einem der vorangehenden Ansprüche, **dadurch gekennzeichnet, dass** sich die Auffangmittel (30, 32) relativ zur Laufrichtung der Vorrichtung transversal erstrecken.

13. Vorrichtung nach einem der vorangehenden Ansprüche, **dadurch gekennzeichnet, dass** die Auffangmittel (30, 32) in einem hängenden Zustand getragen werden.

14. Vorrichtung nach einem der vorangehenden Ansprüche, **dadurch gekennzeichnet, dass** sie laterale Auffangmittel (52, 54) umfasst, die sich hinter der hinteren longitudinalen Öffnung (26) erstrecken bzw. dass sie laterale Auffangmittel umfasst, die sich vor der vorderen longitudinalen Öffnung (24) erstrecken.

15. Vorrichtung nach einem der vorangehenden Ansprüche, **dadurch gekennzeichnet, dass** die Auffangmittel (230, 232) höhenverstellbar sind.

## Revendications

1. Appareil (10) pour déchiqueter un matériel, en particulier du matériel végétal, plus spécialement du matériel herbu, reposant sur un sol respectif (13), comprenant un châssis (12) définissant un compartiment (19) pour loger un rotor à déchiqueter (20) et ayant au moins une ouverture (24, 26) permettant le passage du matériel et se développant longitudinalement de l'appareil, **caractérisé en ce qu'**il comprend des moyens d'interception (30, 32) espacés longitudinalement de l'ouverture correspondante (24, 26) pour former une sortie d'air.

2. Appareil selon la revendication 1, **caractérisé en ce qu'**il comprend des moyens, situés au niveau de l'ouverture longitudinale correspondante (24, 26), pour intercepter le matériel, ces moyens se présentant sous la forme de moyens d'interception correspondants qui sont conformes à une direction substantiellement perpendiculaire par rapport au sol.

3. Appareil selon l'une quelconque des revendications précédentes, **caractérisé en ce qu'**il comprend des moyens (28, 29) pour fermer l'ouverture correspondante et qui sont situés au niveau de l'ouverture longitudinale (24, 26) elle-même.

4. Appareil selon l'une quelconque des revendications précédentes, **caractérisé en ce que** les moyens d'interception (30) sont situés au niveau de l'ouverture longitudinale antérieure (24).

5. Appareil selon l'une quelconque des revendications précédentes, **caractérisé en ce que** les moyens d'interception (32) sont situés au niveau de l'ouverture longitudinale postérieure (26).

6. Appareil selon l'une quelconque des revendications précédentes, **caractérisé en ce qu'**il comprend des moyens d'interception (30, 32) dont l'extrémité inférieure (30a, 32a) se développe vers le bas au-delà de l'extrémité inférieure (28a, 29a) des moyens respectifs (28, 29) afin de fermer l'ouverture longitudinale correspondante (24, 26).

7. Appareil selon l'une quelconque des revendications précédentes, **caractérisé en ce que** les moyens d'interception (30, 32) sont conçus pour se développer avec leurs extrémités inférieures correspondantes substantiellement vers le bas par rapport au sol et pour venir en contact avec le sol et/ou le matériel reposant sur celui-ci.

8. Appareil selon l'une quelconque des revendications précédentes, **caractérisé en ce qu'**il comprend des moyens d'interception (30, 32) se présentant sous la forme de moyens souples se développant principalement en deux dimensions, ou sous la forme d'une feuille souple.

9. Appareil selon l'une quelconque des revendications précédentes, **caractérisé en ce que** les moyens d'interception (32) au niveau de l'ouverture postérieure (26) sont situés à l'arrière des moyens de fermeture correspondants (29), et sont longitudinalement espacés des moyens de fermeture correspondants (29), ou sont espacés longitudinalement à partir de l'ouverture postérieure (26).

10. Appareil selon l'une quelconque des revendications précédentes, **caractérisé en ce que** les moyens d'interception (30) au niveau de l'ouverture antérieure (24) sont situés à l'avant des moyens de fermeture correspondants (28).

11. Appareil selon l'une quelconque des revendications précédentes, **caractérisé en ce que** les moyens d'interception (30) au niveau de l'ouverture antérieure (24) sont espacés longitudinalement à partir des moyens de fermeture correspondants (28).

12. Appareil selon l'une quelconque des revendications précédentes, **caractérisé en ce que** les moyens d'interception (30, 32) se développent transversalement par rapport à la direction de marche de l'appareil.

13. Appareil selon l'une quelconque des revendications précédentes, **caractérisé en ce que** les moyens d'interception (30, 32) sont soutenus dans une condition suspendue.

14. Appareil selon l'une quelconque des revendications précédentes, **caractérisé en ce qu'**il comprend des moyens d'interception latéraux (52, 54), se développant vers l'arrière à partir de l'ouverture longitudinale postérieure (26), ou **en ce qu'**il comprend des moyens d'interception latéraux se développant à l'avant de l'ouverture longitudinale antérieure (24).

15. Appareil selon l'une quelconque des revendications précédentes, **caractérisé en ce que** les moyens d'interception (230, 232) sont réglables en hauteur.
